# EUROPÄISCHE PATENTANMELDUNG

(11) **EP 4 461 876 A2**
(43) Veröffentlichungstag der Anmeldung: **13.11.2024**
(21) Anmeldenummer: 24169493.4
(22) Anmeldetag: 10.04.2024
(51) Int. Cl.: E02B 11/00, A01G 25/00

(54) **SCHACHT ZUR GRUNDWASSERREGULIERUNG**

(30) Priorität: 19.04.2023 DE 102023109840
(71) Anmelder: Uhling, Christoph, 48683 Ahaus Alstätte (DE)
(72) Erfinder: Uhling, Christoph, 48683 Ahaus Alstätte (DE); Uhliing, Klaus, 48683 Ahaus (DE)
(74) Vertreter: Ostriga Sonnet Wirths & Vorwerk

(57) **Zusammenfassung**

Schacht zur Grundwasserspiegelregulation auf einer Nutzfläche, wie Acker- oder Forstfläche oder Baufläche, insbesondere Drainageschacht, mit einer zylindrischen Schachtwand , die einen Aufnahmeraum für Drainagewasser umgibt, mit einem Schachtboden, der in den Schacht nach unten hin begrenzt, mit einer dem Schachtboden abgewandten Wartungsöffnung , über welche der Schacht zugänglich ist, mit wenigstens einem Zulauf für eine Drainageleitung, über welchen Drainagewasser dem Aufnahmeraum zuführbar ist, mit wenigstens einem Ablauf, über den das Drainagewasser aus dem Aufnahmeraum abführbar ist, mit einer Regulationseinheit, die als vertikal im Aufnahmeraum angeordnete Barriere zwischen dem Zulauf und dem Ablauf angeordnet ist und den Aufnahmeraum in einen Zulaufraum und einen Ablaufraum unterteilt, wobei das zulaufende Drainagewasser im Zulaufraum gesammelt wird und über einen Überlauf über die Barriere in den Ablaufraum gelangen kann, mit einer Höhenverstellung für die Barriere, mittels derer die Höhe des Zulaufraumes veränderbar ist, dadurch gekennzeichnet, dass die Höhenverstellung stufenlos ausgestaltete ist und/oder die Barriere schachtbodennah eine verschließbare Ablauföffnung aufweist, die den Zulaufraum und den Ablaufraum unter Umgehung des Überlaufs miteinander verbindet.

## Beschreibung

Die Erfindung betrifft einen Schacht zur Grundwasserspiegelregulation auf einer Nutzfläche, wie Acker- oder Forstfläche oder Baufläche, insbesondere Drainageschacht,
- mit einer zylindrischen Schachtwand, die einen Aufnahmeraum für Drainagewasser umgibt,
- mit einem Schachtboden, der in den Schacht nach unten hin begrenzt,
- mit einer dem Schachtboden abgewandten Wartungsöffnung, über welche der Schacht zugänglich ist,
- mit wenigstens einem Zulauf für eine Drainageleitung, über welchen Drainagewasser dem Aufnahmeraum zuführbar ist,
- mit wenigstens einem Ablauf, über den das Drainagewasser aus dem Aufnahmeraum abführbar ist,
- mit einer Regulationseinheit, die als vertikal im Aufnahmeraum angeordnete Barriere zwischen dem Zulauf und dem Ablauf angeordnet ist und den Aufnahmeraum in einen Zulaufraum und einen Ablaufraum unterteilt, wobei das zulaufende Drainagewasser im Zulaufraum gesammelt wird und über einen Überlauf über die Barriere in den Ablaufraum gelangen kann,
- mit einer Höhenverstellung für die Barriere, mittels derer die Höhe des Zulaufraumes veränderbar ist.

Aus dem druckschriftlich nicht belegbaren Stand der Technik ist es bekannt, Nutzflächen zu drainieren. Dabei ist der Begriff "Nutzfläche" als eine Fläche definiert, die der menschlichen Nutzung unterliegt. Nutzungen können dabei neben der Land-und Forstwirtschaft auch bauliche Nutzungen oder sonstige Nutzungen sein.

Drainiert werden Flächen, die für die vorgesehene Nutzung zu viel Feuchtigkeit enthalten. Die Feuchtigkeit kann aufgrund der Bodenstruktur, insbesondere der Wasserhaltefähigkeit der Böden, die vorgesehene Nutzung problematisch machen. Ebenso ist es möglich, dass die klimatischen Bedingungen, insbesondere die Niederschlagsbedingungen, zur Vernässung der Böden und damit zu einer Verhinderung der vorgesehenen Nutzung führen. Schließlich können auch die topographischen Gegebenheiten dazu führen, dass ohne Drainage zu hohe Grundwasserspiegel für eine Nutzung vorherrschen. Dabei ist zu berücksichtigen, dass häufig mehrere Faktoren zugleich eine Rolle spielen und nur selten einer der genannten Faktoren allein für eine der Nutzung entgegenstehende Vernässung der Böden verantwortlich ist.

Drainiert wird in der Regel mithilfe von sogenannten Drainagerohren. Hierbei handelt es sich um in der Regel flexible Kunststoffrohrleitungen, die mit einer Vielzahl kleiner Öffnungen versehen sind. Durch die Öffnungen der Rohrleitungen dringt das im Boden befindliche Wasser ein und wird abgeführt. Je nach Region münden die einzelnen Drainageleitungen unmittelbar in Entwässerungsgräben oder in Sammelleitungen.

Aus dem druckschriftlich nicht belegbaren Stand der Technik ist es darüber hinaus bekannt, die Drainagerohre bzw. Sammelrohre einem Schacht zuzuführen. Über diesen Schacht sind die Leitungen zu Wartungszwecken, beispielsweise für Spülzwecke zugänglich. Auch hier gibt es verschiedene Lösungen. Es können durchaus mehrere Drainageleitungen in ein und denselben Schacht münden. Auch ist es bekannt, mehrere Sammelleitungen oder lediglich eine Sammelleitung in einem Schacht zusammenzuführen. Die Art und Weise der Anordnung der Wartungsschächte hängt insbesondere von den lokalen Gegebenheiten ab.

Der Zweck der Drainage ist es, einen für die jeweilige Nutzung geeigneten Grundwasserspiegel einzustellen.

Veränderungen in der Niederschlagshäufigkeit und der Niederschlagsintensität führen dazu, dass das herkömmliche Drainagekonzept an seine Grenzen stößt. So ist es beispielsweise bekannt, dass ausbleibende Niederschläge in den Sommermonaten insbesondere auch auf drainierten Flächen zu trockenen Böden führen. Die durch die Drainage hervorgerufene, fehlende Bodenfeuchtigkeit führt zu einem verminderten Pflanzenwuchs oder im schlimmsten Fall zum Ausfall ganzer Ernten. Gleichzeitig erfordern hohe Niederschlagsmengen in den Frühjahrs- und Herbstmonaten eine ausreichende Drainage der landwirtschaftlichen Flächen, da diese sonst nicht mit Maschinen befahrbar sind.

Die Firma GEIGER agri solutions hat einen Schacht entwickelt, in welchen eine Drainageleitung mündet und in welchem über einzelne Schieberplatten eine in ihrer Höhe variierbare Barriere zwischen Zu- und Ablauf geschaffen werden kann. Das über die Drainageröhre in den Schacht einfließende Wasser wird durch die Barriere angestaut, bis es die Barriere übertritt und dann über den Ablauf den Entwässerungsgräben zugeführt wird. Auf diese Weise lässt sich der Grundwasserspiegel über die Ebene der Drainageröhre hinaus anheben. Veröffentlicht wurde diese Lösung in der Münsterlandzeitung am 29.12.2022.

Auch wenn diese Lösung das Problem mit der Wasserhaltung auf drainierten Flächen, insbesondere die zu starke Entwässerung während Trockenperioden, angeht, ist sie jedoch mit einer Reihe von Nachteilen verbunden. Die einzelnen Schieberplatten, mit welchen die Barriere erstellt wird, haben eine Höhe von ca. 15 cm. Der Grundwasserspiegel auf der drainierten Fläche ist somit lediglich im Rahmen dieses 15 cm-Rasters einstellbar. Dies kann auf landwirtschaftlich und forstwirtschaftlich genutzten Flächen den dort wachsenden Nutzpflanzen unter Umständen nicht ausreichend gerecht werden. Je nach Wasserbedarf und Wurzeltiefe lässt sich mit diesem Raster möglicherweise der optimale Grundwasserspiegel nicht korrekt einstellen.

Der Schacht selbst wird durch ein Kunststoffrohr mit einem Durchmesser von etwa 20 cm gebildet, welches lediglich einen Zulauf für ein Drainagerohr bietet. Je nach Einsatzbedingungen müssen also eine Vielzahl von Schächten für eine drainierte Fläche eingesetzt werden.

Die die Barriere bildenden Platten müssen in Nutschienen eingeführt werden. Die Nutschienen sind anfällig für den Eintrag von Verschmutzungen, beispielsweise in Drainagewasser befindlichen Schwebestoffen. Diese können im Laufe der Zeit zu Problemen beim Einsatz und bei der Entnahme der Schieberplatten führen. Insbesondere bei stark eisenhaltigem Grundwasser, wie es beispielsweise bei häufig drainierten Moorböden vorkommt, können sich in den Nuten hartnäckige, die Funktion der Barriere beeinträchtigende Verkrustungen bilden.

Insgesamt erlaubt die vorgenannte Lösung mit einer Vielzahl von Individualbauteilen keine Nachrüstung bestehender Wartungsschächte, was den Aufwand zur Regulierung des Grundwasserspiegels auf drainierten Flächen wesentlich erhöht.

Darüber hinaus gibt es Situationen, in denen der angehobene Grundwasserspiegel zügig abgesenkt werden muss, um die Bewirtschaftung der Nutzfläche zu ermöglichen. Hierfür ist es bei dem bekannten System erforderlich, eine Vielzahl von Platten zu entfernen, was bei dem geringen Schachtdurchmesser und möglicherweise aufgrund von Witterungsbedingungen ständig nachlaufendem Wasser, Arbeiten unterhalb des im Schacht gebildeten Wasserspiegels erfordert.

Aufgabe der Erfindung ist es deshalb, einen optimierten Schacht zur Regulierung des Grundwasserspiegels auf drainierten Flächen zu schaffen.

Gelöst wird die Aufgabe der Erfindung von einem Schacht zur Grundwasserspiegelregulation mit den Merkmalen des Anspruchs 1, insbesondere mit dessen kennzeichnenden Merkmalen, wonach
- die Höhenverstellung stufenlos ausgestaltete ist und/oder
- die Barriere schachtbodennah eine verschließbare Ablauföffnung aufweist, die den Zulaufraum und den Ablaufraum unter Umgehung des Überlaufs miteinander verbindet.

Der erfindungsgemäße Schacht wird vorzugsweise aus standardisierten Betonringen zusammengesetzt, wie sie beispielsweise für den Aufbau von Revisionsschächten im Siedlungsbau genutzt werden, um Abwasser Kanäle oder Regenentwässerungskanäle inspizieren zu können. Diese gibt es in verschiedenen Durchmessern, wobei sich Durchmesser größer/gleich 70 cm aufgrund Ihres Rückhaltevolumen aber auch ihrer grundsätzlichen Begehbarkeit bewährt haben. Darüber hinaus existieren für solche Schächte hoch belastbare, befahrbare Abdeckungen. Dies ist im gesamten Anwendungsbereich der Erfindung von großem Vorteil, da auf Nutzflächen regelmäßig mit schweren Maschinen gearbeitet wird und man damit rechnen muss, dass diese auch die Schachtabdeckungen befahren.

Eine stufenlose Höhenverstellung der Barriere erlaubt es, den Grundwasserspiegel nutzungsindividuell einzustellen. Dies ist insbesondere auf land- und forstwirtschaftlichen Flächen von Vorteil. Auf diese Weise kann der Grundwasserspiegel in genauen dem Bereich gehalten werden, der eine optimale Pflanzenverfügbarkeit des Wassers gewährleistet.

Mit der verschließbaren Ablauföffnung, welche den Zulaufraum und den Ablaufraum unter Umgehung der Barriere bzw. unter Umgehung des Überlaufs, mit einander verbindet, lässt sich auf der drainierten Fläche eine Schnellentwässerung durchführen. Dies kann insbesondere in Situationen sinnvoll sein, in welchen kurzfristig eine Befahrbarkeit der Nutzfläche mit schweren Maschinen hergestellt werden muss, die jedoch beispielsweise durch anhaltende Niederschläge erschwert ist. In solchen Fällen kann mittels der Ablauföffnung der Grundwasserspiegel kurzfristig auf das Niveau der im Boden verlegten Drainagerohren abgesenkt werden. Nach erfolgter Bodenbearbeitung durch die Maschinen lässt sich bei anhaltenden Niederschlägen der Grundwasserspiegel schnell wieder auf das durch die Barriere eingestellte Niveau anheben.

Besonders bevorzugt ist eine Ausführungsform, bei welcher die Barriere als ein vertikal im Aufnahmeraum angeordnetes Rohr ausgebildet ist, welches mit seinem schachtbodennahen Ende am Ablauf angeschlossen ist, dessen schachtbodenfernes Ende den Überlauf bildet und dessen Rohrinnenraum der Ablaufraum ist.

Eine solchermaßen ausgebildete Barriere, insbesondere, wenn sie mit Standardrohren aus dem Bereich der Regenwasserentwässerung im Siedlungsbau hergestellt ist, lässt sich einfach und unproblematisch auch in schon bestehenden Wartungsschächten nachrüsten.

Die schachtbodennahe Ablauföffnung ist dann vom Rohr ausgebildet, beispielsweise kann es sich um ein T-Stück im Rohr handeln. Die Ablauföffnung kann über eine Klappe oder einen Schieber verschließbar sein. Eine Klappe ist hierbei deutlich bevorzugt, da sie gegenüber Fehlfunktionen durch Verschmutzung unempfindlich ist. Die Klappe wird dabei bevorzugt durch Schwerkraft in ihrer geschlossenen Position gehalten. Besonders bei einer Klappe aus Kunststoff kann es von Vorteil sein, wenn diese über ein zusätzliches Gewicht beschwert ist, um den Auftrieb des Kunststoffmaterials im Wasser zu kompensieren. Die Dichtigkeit der Klappe wird durch den anstehenden Wasserdruck im Zulaufraum gewährleistet, welcher die Klappe gegen einen Dichtsitz presst.

Das die Barriere bildende Rohr ist bevorzugt teleskopisch ausgebildet, um eine stufenlose Verstellbarkeit der Barriere und somit eine stufenlose Einstellbarkeit des Grundwasserspiegels zu gewährleisten. Hierbei ist vorgesehen, dass zwei Rohre unterschiedlichen Durchmessers über eine Teleskopmuffe einander angeordnet sind. Selbstverständlich ist es auch denkbar, dass mehrere ineinander schiebebare Rohre die stufenlos einstellbare Barriere bilden.

Es ist darüber hinaus vorgesehen, dass der Schachtboden seitlich unterhalb des Ablaufs einen Absatzbereich für im Drainagewasser mitgeführte Schweb- und Fremdstoffe ausbildet. Diese können sich im Absatzbereich sammeln und im Rahmen von Wartungsarbeiten regelmäßig entfernt werden. Auf diese Weise ist sichergestellt, dass die Funktion insbesondere der bodennahen Klappe bzw. des Schiebers zum Verschluss der Ablauföffnung nicht beeinträchtigt wird.

Das geeignete Mittel zum Verschließen der Ablauföffnung, insbesondere die Klappe oder der Schieber, verfügen in einer besonders bevorzugten Ausführungsform der Erfindung über die Möglichkeit einer Fernentriegelung. Es ist also nicht nötig, sich innerhalb des Schachtes auf die Ebene der Ablauföffnung zu begeben, um die Klappe bzw. den Schieber zu öffnen.

Es ist vorgesehen, dass die Fernentriegelung über eine Wartungsöffnung des Schachtes, insbesondere also über die schachtbodenabgewandte Schachtöffnung, zugänglich ist. Die Fernentriegelung kann über geeignete Betätigungsmittel erfolgen. Hierbei ist beispielsweise an eine Zugkette oder an einen Spindelantrieb gedacht.

Diese einfachen, mechanischen Betätigungsmittel sind in ihrer Handhabung solide und für jedermann einfach zu bedienen. Dies schließt jedoch nicht aus, dass eine elektromotorisch oder hydraulische Fernentriegelung vorhanden ist, die über verschiedene, im Stand der Technik bekannte Funktechnologien oder Aktivierungsschalter in Betrieb genommen wird. Dabei ist es ohne weiteres denkbar, die Elektrizitätsversorgung nicht nur netzgebunden, sondern auch netzunabhängig zu gewährleisten. Hierzu können beispielsweise solargespeiste Stromspeicher dienen.

Der im Schacht befindliche Zulaufraum ist vorzugsweise mit einer Füllstandsanzeige ausgestattet. Dies kann eine einfache, an einer Schachtwand angeordnete Skala sein. Genauso ist es jedoch denkbar, elektrische oder elektronische Füllstandsanzeigen zu integrieren und die Füllstandsmeldungen nicht nur in Form eines Displays vor Ort, sondern auch über eine Fernabfrage mittels gängiger Funktechnologien zu ermöglichen. Mit der Füllstandsanzeige lässt sich auf die ungefähre Höhe des Grundwasserspiegels schließen. Diese Daten lassen sich insbesondere im Bereich der Land- und Forstwirtschaft für ein Pflanzenwachstumsmanagement nutzen, da sich aus ihnen unter anderem auch auf die innerhalb des Bodens pflanzenverfügbare Feuchtigkeit schließen lässt.

Die Erfindung betrifft sodann auch ein Drainagesystem zur Grundwasserspiegelregulation mit den Merkmalen des nebengeordneten Anspruchs 9. Dieses nutzt wenigstens einen Schacht, wie er vorangehend vorgestellt wurde. Dieser Schacht verfügt jedoch bevorzugt über mehrere Zuläufe für mehrere Drainageleitungen. Dabei sei hier angemerkt, dass die eingangs erwähnte Sammelleitung auch eine Drainageleitung im Sinne der Terminologie dieser Erfindung ist.

Die Erfindung betrifft sodann auch eine Regulationseinheit für einen Schacht zur Regulation des Grundwasserspiegels, wobei die Regulationseinheit dazu geeignet ist, einen Schacht zur Aufnahme von Drainagewasser in einen Zulaufraum und einen Ablaufraum zu unterteilen und wobei die Regulationseinheit einen Überlauf bereitstellt, welcher vom im Schacht zurückgehaltenen Drainagewasser überwunden werden muss, um vom Zulaufraum in den Ablaufraum zu gelangen, wobei der Überlauf in seiner Höhe relativ zu einem Schachtboden verstellbar ist.

Eine solche Regulationseinheit kennzeichnet sich zunächst dadurch, dass die Höhe des Überlaufs stufenlos einstellbar ist.

Die Regulationseinheit kann sodann derart ausgestaltet sein, dass sie selbst den Ablaufraum zur Verfügung stellt, insbesondere indem die Regulationseinheit als ein stufenlos höhenverstellbares Rohr ausgebildet ist, dessen Rohrinnenraum den Ablaufraum zur Verfügung stellt.

Das Rohr verfügt über ein erstes Ende, welches dazu vorgesehen ist, an einen Ablauf des Schachtes angeschlossen zu sein. Das Rohr verfügt darüber hinaus über ein zweites, freies Ende mit einer Einlauföffnung, dessen die Öffnung umgebende Rohrwandung den Überlauf bildet.

Das als Regulationseinheit ausgebildete Rohr verfügt darüber hinaus in einer weiteren Ausführungsform über eine Ablauföffnung. Diese Ablauföffnung ist vorzugsweise näher am ersten Rohrende als am zweiten Rohrende angeordnet und mittels einer Klappe oder eines Schiebers verschließbar. Diese Ablauföffnung dient dazu, einen schachtseitigen Zulauf und den schachtseitigen Ablauf unter Umgehung des Überlaufes miteinander zu verbinden.

Diese Regulationseinheit dient bevorzugte dazu, vorhandene Wartungs- oder Revisionsschächte von drainierten Flächen nachzurüsten und so zu einem vorbeschriebenen Schacht zur Grundwasserspiegelregulation umzurüsten.

Die Erfindung betrifft sodann auch eine Teleskoprohranordnung mit den Merkmalen des nebengeordneten Anspruchs 10. Eine solche Teleskoprohranordnung beinhaltet eine Teleskopmuffe, welche die Rohrstücke der Teleskoprohranordnung einander anordnet und eine relative Verschieblichkeit der Rohrstücke zueinander ermöglicht. Diese zeichnet sich zunächst insbesondere dadurch aus, dass ein erstes Rohrstück in einem ersten Zylinderabschnitt der Teleskopmitte und ein zweites Rohrstücken in einem zweiten Zylinderabschnitt angeordnet ist.

In einer ersten Ausführungsform der Teleskoprohranordnung ist die Muffe von einer Ringwand gebildet, deren Außenumfangsfläche den ersten Zylinderabschnitt bildet und gleichzeitig Rohranlagefläche für das erste Rohrstück ist. Die Innenumfangsfläche der Ringwand bildet den zweiten Zylinderabschnitt und ist gleichzeitig Rohranlagefläche für das zweite Rohrstück.

Diese erste Ausführungsformen der Teleskopmuffe ist dazu vorgesehen, innerhalb des ersten Rohrstücks gelagert zu sein, wobei ein umfangserweiternder Anlageflansch der Ringwand einen Endanschlag für das Einschieben der Muffe in das erste Rohrstück dient.

In einer zweiten Ausführungsform der Teleskoprohranordnung verfügt die Muffe über eine Gehäusewand, die einen Durchtrittsraum umgibt.

Der Durchtrittsraum lässt sich in einen ersten Zylinderabschnitt und einen zweiten Zylinderabschnitt unterteilen, wobei diese Zylinderabschnitte koaxial zu einer Durchtrittsachse des Durchtrittsraumes und axial hintereinander angeordnet sind.

Dabei verfügt der erste Zylinderabschnitt über einen größeren Durchmesser als der zweite Zylinderabschnitt. Im Übergangsbereich vom ersten Zylinderabschnitt zum zweiten Zylinderabschnitt bildet die Gehäusewand eine ringscheibenartige Stufe aus. Diese Stufe dient als Anschlag für das erste Rohrstück, welches in den ersten Zylinderabschnitt eingeschoben wird.

Die zweite Ausführungsform der Teleskopmuffe kennzeichnet sich also dadurch, dass diese außenumfänglich auf das erste Rohrstück aufgeschoben wird, wobei das zweite Rohrstück in den zweiten Zylinderabschnitt der Muffe eingeschoben ist und so innerhalb des Durchtrittsraumes und innerhalb des ersten Rohrstücks relativbeweglich gelagert ist.

Die Erfindung betrifft sodann eine Stauklappe für eine Rohrleitung mit den Merkmalen des nebengeordneten Anspruchs 19. Diese Stauklappe kennzeichnet sich insbesondere dadurch, dass sie durch Schwerkraftwirkung in ihrer Geschlossenstellung gehalten ist. Darüber hinaus wird die Dichtigkeit der Verschlussklappe insbesondere durch den Fluiddruck in dem Behälter, in welchem die Stauklappe befestigt ist, erreicht. Hierzu verfügt die Stauklappe insbesondere über eine Andruckplatte, an welcher die Verschlussklappe anliegt. Dabei ist zwischen der Andruckplatte und der Verschlussklappe vorzugsweise einen Dichtelement angeordnet, um einen Fluiddurchtritt im Bereich der gegenseitigen Anlageflächen zu verhindern.

Die Andruckplatte ist auf ihrer der Verschlussklappe abgewandten Seite mit einem Rohrstutzen versehen. Dieser dient dem Anschluss der Stauklappe an eine durch die Stauklappe zu verschließende Rohrleitung.

Bei einer bevorzugten Ausführungsform ist es vorgesehen, dass eine in der Andruckplatte angeordnete Ablauföffnung in ihrem Durchmesser durch den Einsatz eines Adapterringes veränderbar ist. Dabei ist der Rohrstutzen zum Anschluss an die Rohrleitung bevorzugt am Adapterring befestigt. Auf diese Weise lässt sich ein und dieselbe Rückstauklappe besonders einfach an verschiedene Rohrleitungsdurchmesser anpassen.

Die Andruckplatte trägt darüber hinaus das Scharnierelement, an welchem die Verschlussklappe schwenkbar angeordnet ist. Auf diese Weise lässt sich die Stauklappe als Einheit vormontieren.

In einer weiteren Ausführungsform ist vorgesehen, dass die Verschlussklappe mit einem Gewichtsträger versehen ist, der bei Bedarf mit einem die Verschlussklappe beschwerenden Gewicht versehen ist. Mittels des Gewichtes ist es möglich, gegen Auftriebskräfte der Verschlussklappe zu wirken, die in Abhängigkeit vom Herstellungsmaterial der Verschlussklappe und dem Fluid, in welchen die Verschlussklappe eingesetzt wird, auftreten können. Beispielsweise ist es denkbar, dass eine Verschlussklappe aus Kunststoff, eingesetzt in Wasser, gewisse Auftriebskräfte erfährt. Diese können über das Beschweren der Kunststoffklappe mit einem geeigneten Gewicht überwunden werden. So kann die Verschlussklappe auch in wässrigem Milieu allein durch die Schwerkraftwirkung in ihrer geschlossenen Stellung gehalten werden.

Bevorzugt findet die erfindungsgemäße Stauklappe Verwendung in dem eingangs beschriebenen und ebenfalls zur Erfindung gehörenden Schacht zur Grundwasserspiegelregulation. Dort lässt es sich besonders vorteilhaft als Teil einer ebenfalls beschriebenen Teleskoprohranordnung einsetzen und dient dazu, eine schachtbodennahe Ablauföffnung zur Umgehung des Überlaufes zu verschließen.

Weitere Vorteile der Erfindung sowie ein besseres Verständnis derselben ergibt sich aus der nachfolgenden Beschreibung von Ausführungsbeispiel. Es zeigen:
- Figur 1:: Eine mit Drainagerohren versehene Nutzfläche mit direktem Einlauf in einen Entwässerungsgraben
- Figur 2:: Eine mit Drainagerohren versehene Nutzfläche mit gruppiert in Wartungsschächten mündenden Drainagerohren
- Figur 3:: Eine mit Drainagerohren versehene Nutzfläche, die eine Sammelleitung aufweist, welche an einen Wartungsschacht angeschlossen ist
- Figur 4:: Ein erfindungsgemäßer Schacht zur Grundwasserspiegelregulation
- Figur 5:: Eine erfindungsgemäße Teleskoprohranordnung in erster Ausführungsform in Seitenansicht
- Figur 6:: Die Teleskoprohranordnung gemäß Figur 5 in einer Schnittdarstellung gemäß Schnittlinie A-A
- Figur 7:: Eine erfindungsgemäße Teleskopmuffe in Seitenansicht zur Verwendung in der Teleskoprohranordnung gemäß Figur 5
- Figur 8:: Die Teleskopmuffe gemäß Figur 7 in Schnittdarstellung gemäß Schnittlinie B-B
- Figur 9:: Eine erfindungsgemäße Teleskoprohranordnung in zweiter Ausführungsform in Seitenansicht
- Figur 10:: Die Teleskoprohranordnung gemäß Figur 9 in Schnittdarstellung gemäß Schnittlinie D-D
- Figur 11:: Eine erfindungsgemäße Teleskopmuffe in Seitenansicht zur Verwendung in der Teleskoprohranordnung gemäß Figur 9
- Figur 12:: Die Teleskopmuffe in Schnittdarstellung gemäß Schnittlinie C-C in Figur 11
- Figur 13:: Eine Explosionsansicht einer erfindungsgemäßen Stauklappe
- Figur 14:: Eine rückwärtige Ansicht auf die Stauklappe gemäß Figur 13
- Figur 15:: Eine Schnittansicht der in Figur 13 gezeigten Stauklappe entsprechend der Schnittlinie E-E in Figur 14
- Figur 16:: Eine Seitenansicht auf die in Figur 13 dargestellte Stauklappe in Geschlossenstellung
- Figur 17:: Eine Seitenansicht auf die Stauklappe gemäß Figur 16 in Offenstellung

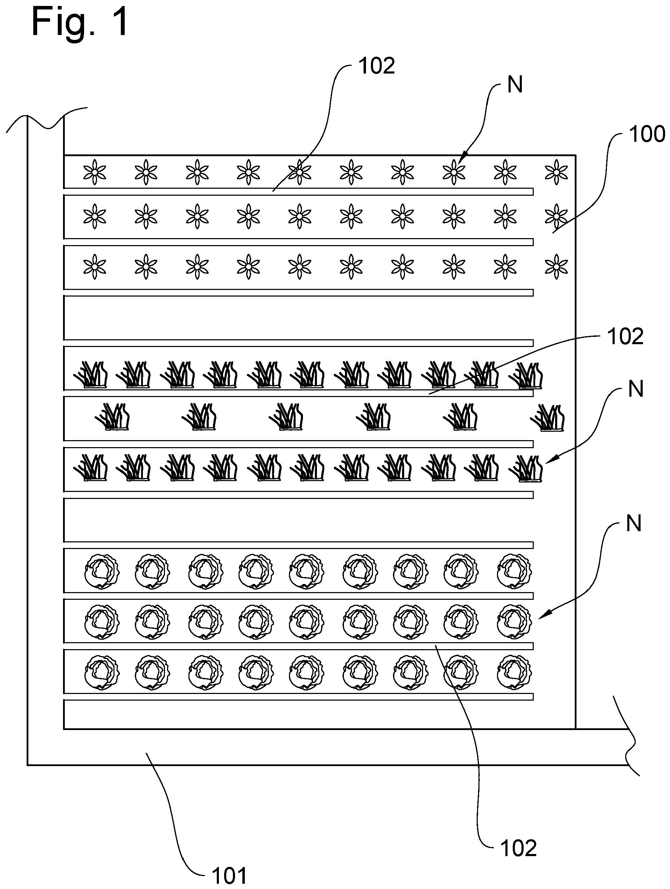

Die Figuren 1-3 zeigen zunächst schematisch dargestellten Nutzflächen 100 mit beispielhaften, gängigen Drainageverfahren. Die Erfindung wird vornehmlich an Hand von landwirtschaftlichen Nutzflächen beschrieben, auf denen Nutzpflanzen N aufwachsen. Dies schränkt den Einsatzzweck jedoch nicht auf einen ausschließlich landwirtschaftlichen Einsatzzweck ein.

Die Nutzfläche 100 in Figur 1 ist an zwei Seiten von einem Entwässerungsgraben 101 umgeben und mit einer Vielzahl von Drainagerohren 102 versehen. Die Drainagerohre sind im Wesentlichen parallel zueinander angeordnet sind und münden jeweils in den Entwässerungsgraben 101. Die Drainagerohre selbst sind in der Regel in einer Tiefe von etwa einem Meter angeordnet und weisen zum Entwässerungsgraben 101 hin ein leichtes Gefälle auf. Die hier dargestellte Direktentwässerung der Drainagerohren 102 in den Entwässerungsgraben 101 ist zwar für Deutschland eher unüblich, existiert so jedoch durchaus im Ausland. Sie ist überall dort von Vorteil, wo große Wassermengen abgeführt werden müssen und darüber hinaus ein mehr oder weniger kontinuierlicher Wasserabfluss durch die Drainagerohre 102 gewährleistet ist.

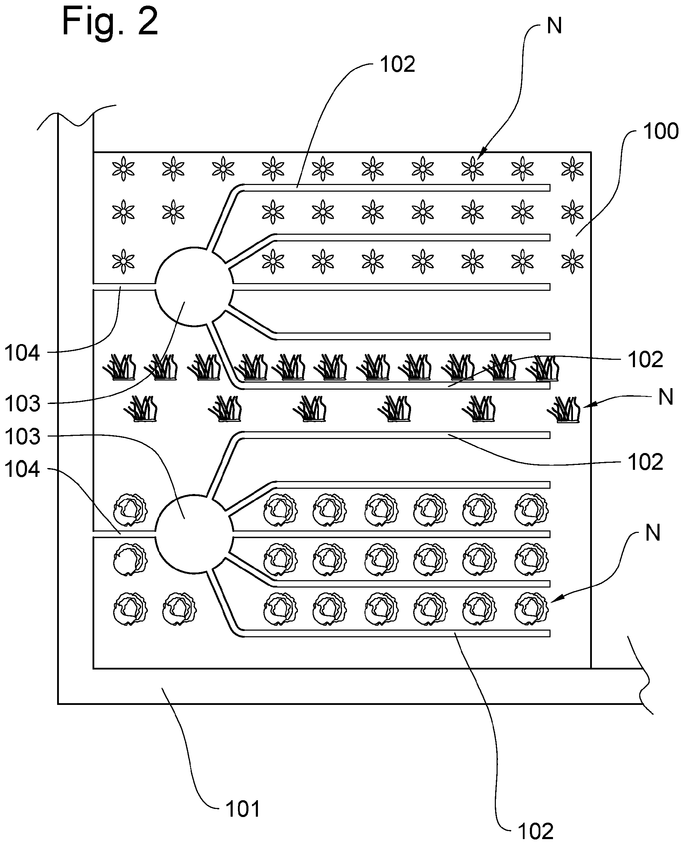

Auch Figur 2 zeigt eine Nutzfläche 100, die an zwei Seiten von einem Entwässerungsgraben 101 umgeben ist. Auch in der Nutzfläche 100 in Figur 2 sind Drainagerohre 102 verlegt. Auch hier verlaufende Drainagerohre 102 im Wesentlichen parallel zueinander. Im Gegensatz zur Darstellung in Figur 1 befinden sich am grabenseitigen Rand der Nutzfläche 100 Wartungs- bzw. Revisionsschächte 103. Die dargestellten Drainagerohre 102 sind in zwei Gruppen zu je 5 Drainagerohren einander zugeordnet. Die Drainagerohre 102 einer jeden Gruppe münden in einen gemeinsamen Revisionsschacht 103. Vom jeweiligen Revisionsschacht 103 geht ein Entwässerungsrohr 104 in den Entwässerungsgraben 101 ab. Die Drainagerohre 102 in Figur 2 entwässern in den jeweiligen Revisionsschacht 103. Dass dort einlaufende Drainagewasser wird über das Entwässerungsrohr 104 in den Entwässerungsgraben 101 eingeleitet. Über den jeweiligen Revisionsschacht 103 sind die Drainagerohre 102 für Wartungen zugänglich. Hier ist insbesondere das Spülen der Rohre zu nennen, um deren Drainagefähigkeit aufrechtzuerhalten.

Der Vorteil eines Drainagesystems gemäß Figur 2 liegt insbesondere darin, dass die Drainagerohre 102 nicht unmittelbar von außen zugänglich sind. Insbesondere auf Flächen, in welchen kein kontinuierlicher Wasserabfluss erfolgt, sondern die Fläche 100 nur periodisch drainiert wird, verhindern zentral in Wartungsschächte einmündende Drainagerohre 102, dass sich Tiere in den Rohren 102 einnisten und die Drainagerohre 102 auf diese Weise zusetzen. Zudem lässt sich über derartige Drainagesysteme jedes Rohr einfach und einzeln spülen. Solche Systeme eignen sich deshalb insbesondere für Bodenverhältnisse, in welchen sich in den Drainagerohren besonders leichte Ablagerungen bilden. Bei solchen Ablagerungen kann es sich um feine Bodenbestandteile handeln. Es kann sich jedoch auch um im Wasser gelöste und im Drainagerohr ausfallende Mineralien, wie Eisenoxyde, handeln.

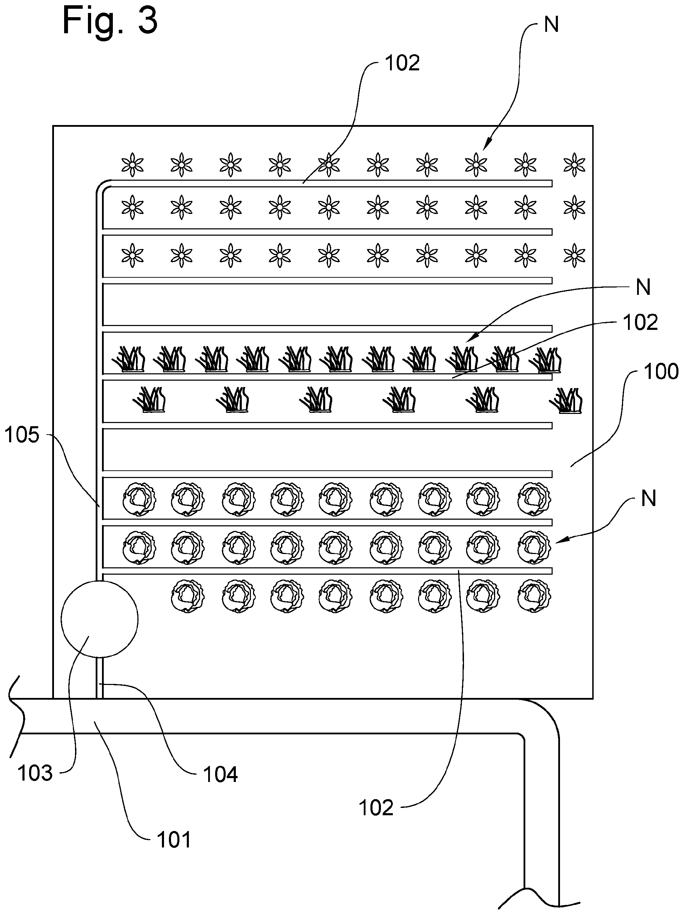

Auch Figur 3 zeigt eine Nutzfläche 100 mit einem lediglich einseitig an die Fläche 100 angrenzenden Entwässerungsgraben 101. Auch auf der dort dargestellten Nutzfläche 100 sind parallel zueinander Drainagerohre 102 verlegt. Jedes Drainagerohr 102 mündet jedoch in ein Sammelrohr 105, welches das in den Drainagerohren 102 ablaufende Wasser aufnimmt.

Das Sammelrohr 105 mündet in einen Wartungs- bzw. Revisionsschacht 103, welcher wiederum über ein Entwässerungsrohr 104 an den Entwässerungsgraben 101 angeschlossen ist. Das über das Sammelrohr 105 aus den Drainagerohren 102 abgeführte Drainagewasser gelangt somit zunächst in den Revisionsschacht 103 und von dort über das Entwässerungsrohr 104 in den Entwässerungsgraben 101.

Das in Figur 3 dargestellte Drainagesystem verhindert ebenfalls einen unmittelbaren, direkten Zugang zu den Drainageröhren 102, sodass auch hier Tiere keinen Zugang zu den Drainagerohren 102 haben. Ein Spülen der Drainagerohre 102 ist hier ebenfalls möglich, wenn auch ein einzelner Zugang zu einem jeden Drainagerohr 102 nicht vorgesehen ist. Festzuhalten ist, dass das Sammelrohr 105 letztlich auch ein Drainagerohr 102 ist, welches lediglich einen Zusatznutzen bzw. Zusatzfunktion, nämlich das Sammeln von Drainagewasser aus weiteren Drainagerohren 102 hat. Sofern nicht explizit Abweichendes angegeben ist, gilt auch das Sammelrohr 105 letztlich als Drainagerohr 102 im Sinne der Erfindung.

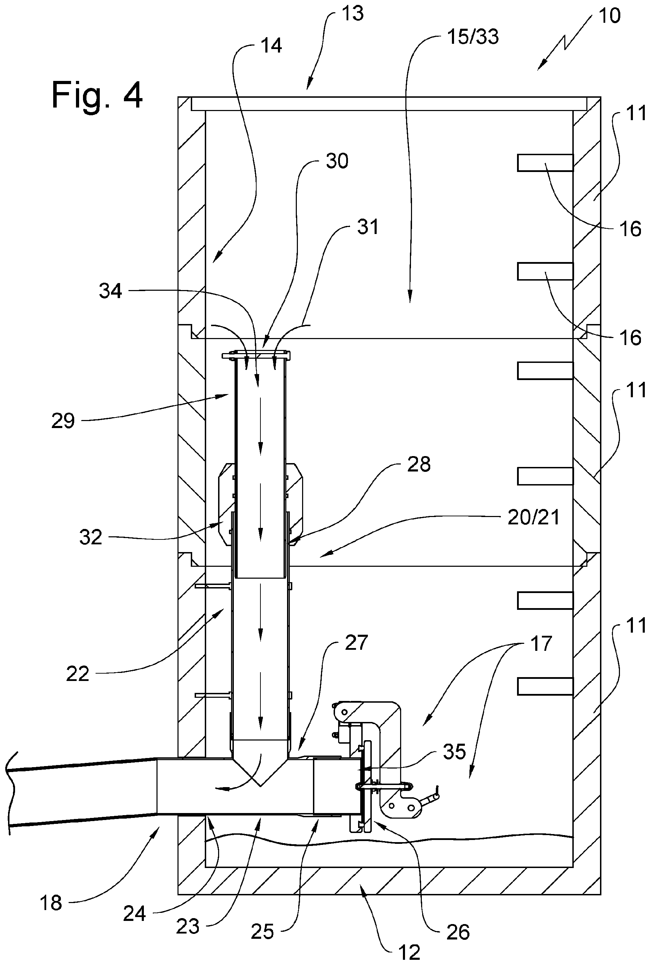

In Figur 4 ist nunmehr ein erfindungsgemäßer Schacht zur Regulation des Grundwasserspiegels - kurz Drainageschacht - insgesamt mit der Bezugsziffer 10 bezeichnet.

Der Schacht 10 kann grundsätzlich einstückig ausgeführt sein, im Ausführungsbeispiel wird er jedoch in bevorzugte Art und Weise der Erfindung aus einzelnen Betonringen 11, die aufeinandergestellt werden, zusammengesetzt. Betonringe 11 werden in vielerlei Durchmesser standardisiert hergestellt und werden regelmäßig zur Herstellung von Schächten für die Revisionen und Wartung von Kanälen, beispielsweise in Siedlungsbau, genutzt.

Der Schacht 10 verfügt über einen Schachtboden 12, der im Ausführungsbeispiel Teil des unteren Betonringes ist. Es ist jedoch genauso möglich, dass der untere Betonring 11 bodenlos ausgestaltet ist und der Schachtboden 12 vom Erdreich oder von einer Fundamentplatte gebildet ist.

Der Schacht 10 verfügt darüber hinaus über eine dem Schachtboden 12 abgewandte Schachtöffnung 13. Diese ist mit einem hier nicht dargestellten Schachtdeckel verschlossen, der jedoch jederzeit für Wartungszwecke geöffnet werden kann.

Der Schacht 10 verfügt über eine von den einzelnen Betonringen 11 ausgebildete, zylindrische Schachtwand 14. Die Schachtwand 14 umgibt einen Aufnahmeraum 15 für Drainagewasser und ist im Ausführungsbeispiel mit nicht zwingend erforderlichen, jedoch vorteilhaften Steigeisen 16 versehen. Über die Steigeisen 16 kann der Schacht 10 vom Wartungspersonal betreten werden.

Die Schachtwand 14 ist sodann mit wenigstens einem Zulauf 17 versehen. Im Ausführungsbeispiel sind 3 Zuläufe 17 gezeigt, die darüber hinaus - ebenfalls optional - unterschiedliche Durchmesser aufweisen. Über den Zulauf 17 kann einen Drainagerohr 102 - auch im Sinne eines Sammelrohres 105 - angeschlossen werden und in den Drainageschacht 10 entwässern. Sodann verfügt die Schachtwand 14 über wenigstens einen Ablauf 18. Mehrere Abläufe 18 sind denkbar. Im Ausführungsbeispiel ist lediglich ein Ablauf 18 gezeigt. Über den Ablauf 18 ist ein Entwässerungsrohr 104 an den Schacht 10 anzuschließen, über welches das im Drainageschacht 10 gesammelte Drainagewasser in einen Entwässerungsgraben 101 ablaufen kann.

Im Schacht 10 ist eine insgesamt mit der Bezugsziffer 20 versehene Regulationseinheit angeordnet.

Die Regulationseinheit 20 besteht aus einer Rohrleitung 21, die im Ausführungsbeispiel aus einzelnen Rohrstücken zusammengesetzt ist.

Schachtbodennahen ist zunächst ein T-Stück 23 vorzufinden, welches mit einem 1. Stutzen 24 in den schachtseitigen Ablauf 18 mündet. Der dem Ablauf 18 gegenüberliegende 2. Stutzen 25 des T-Stückes 23 mündet in den Aufnahmeraum 15 und ist mit einer Stauklappe 26 verschlossen. Der im Ausführungsbeispiel rechtwinklig abgehende 3. Stutzen 27 weist in Richtung Schachtöffnung 13 und trägt eine insgesamt mit Bezugsziffer 28 versehenen Teleskoprohranordnung.

Die Teleskoprohranordnung 28 besteht aus einem ersten Rohrstück 22, welches auf dem dritten Stutzen 27 des T-Stücks 23 aufsitzt und in welchem ein zweites Rohrstück 29 der Teleskoprohranordnung 28 verschieblich einsitzt. Das in Richtung Schachtöffnung 13 weisende freie Ende des zweiten Rohrstücks 29 verfügt über eine offene Einlauföffnung 30. Die die Einlauföffnung 30 umgebende Rohrwandung bildet einen Überlauf 31. Das erste Rohrstück 22 und das zweite Rohrstück 29 sind über eine Teleskopmuffe 32 miteinander verbunden, wobei das zweite Rohrstück 29 teleskopierbar in der Teleskopmuffe 32 und im 1. Rohrstück 22 gelagert ist.

Durch die Regulationseinheit 20 wird der Aufnahmeraum 15 in einen Zulaufraum 33 und einen Ablaufraum 34 unterteilt. Der Ablaufraum 34 wird durch den Innenraum der Rohrleitung 21 gebildet. Der Zulaufraum 33 entspricht dem Aufnahmeraum 15 unter Abzug des Volumens, welches der Rohrleitung 21 und den durch die Rohrleitung 21 gebildeten Ablaufraum 34 entspricht.

Bei geschlossener Stauklappe 26 sammelt sich Drainagewasser im Zulaufraum 33, welches durch den bzw. die Zuläufe 17 in den Schacht 10 gelangt. Sofern und soweit die Umweltbedingungen es zulassen, steigt der Wasserspiegel im Zulaufraum 33 bis zur Einlauföffnung 30 der Rohrleitung 21 an. Er tritt dann über den Überlauf 31 und durch die Einlauföffnung 30 hindurch in den Ablaufraum 34 der Rohrleitung 21 ein und wird von dort über den Ablauf 18 und das dort angeschlossene Entwässerungsrohr 104 dem Entwässerungsgraben 101 zugeführt.

Durch das Ein- bzw. Ausfahren des zweiten Rohrstücks 22 der Teleskoprohranordnung 28 lässt sich die maximale Wasserspiegelhöhe im Zulaufraum 33 bestimmen. Da das Drainagewasser lediglich über den Überlauf 31 in den Entwässerungsgraben 101 gelangen kann, entsteht auf der zu drainierende Fläche im Idealfall ein Rückstau, sodass der Grundwasserspiegel auf der Nutzfläche 100 in etwa bis zur Höhe des Überlaufs 31 ansteigt.

Gegenüber der Situation ohne Regulationseinheit 20, bei welcher der Grundwasserspiegel in etwa der Höhe des Zulauf 17 in den Aufnahmeraum 15 entspricht, kann also mehr Wasser der Nutzfläche zur Verfügung gestellt werden. Dies ist insbesondere von Vorteil, wenn über längere Zeiträume wenig oder kein Niederschlag fällt. Ohne Regulationseinheit würde der Grundwasserspiegel Stück für Stück unter das Niveau der Drainagerohre 102 bzw. unter das Niveau des Zulaufs 17 fallen, bis die im Boden verbleibende Feuchtigkeit derart absinkt, dass sie für auf der Nutzfläche aufwachsende Pflanzen nicht länger verfügbar ist.

Die stufenlos einstellbare Regulationseinheit 20 hat den wesentlichen Vorteil, dass die maximale Höhe des Grundwasserspiegels auf der Nutzfläche 100 optimal an die auf der Nutzfläche 100 wachsenden Pflanzen angepasst werden kann, was insbesondere bei landwirtschaftlich genutzten Flächen 100 unter Berücksichtigung der sich wandelnden Niederschlagsbedingungen von wesentlichem Vorteil ist.

Gegenüber dem Stand der Technik besteht der wesentliche Vorteil, dass lediglich ein Bauteil in seiner Höhe zu verändern ist, nämlich das teleskopierbar gelagerte zweite Rohrstück 29. Es ist nicht erforderlich, eine Vielzahl von Einzelbauteilen einzusetzen oder zu entnehmen.

Die über den zweiten Stutzen 25 des T-Stücks gebildete und mit der Stauklappe 26 verschlossene Ablauföffnung 35 der Rohrleitung 21, eröffnet die Möglichkeit, den Zulaufraum 33 unter Umgehung des Überlauf 31 mit dem Ablaufraum 34 zu verbinden und somit eine Schnellentwässerung des Schachtes 10 und eine zügige Entwässerung der Nutzfläche 100 zu gewährleisten. Dies kann beispielsweise sinnvoll sein, wenn auf Land-und forstwirtschaftlichen Flächen Arbeitsmaschinen eingesetzt werden müssen und hierfür der Grundwasserspiegel zügig abgesenkt werden muss.

Es ist durchaus denkbar, dass die Regulationseinheit 20 ohne Ablauföffnung 35 zum Einsatz kommt. Dann ist auch das in Figur 4 gezeigte T-Stück 23 nicht erforderlich. Stattdessen kann ein gewöhnlicher Rohrbogen eingesetzt werden. Genauso ist es denkbar, dass die Regulationseinheit einen Überlauf 31 aufweist, der nicht stufenlos höhenverstellbar ist, sondern mit einer fixen Höhe versehen ist dann aber mit einer Ablauföffnung 35 und einer Stauklappe 26 versehen. Diese beiden Varianten eignen sich insbesondere für Anwendungsfälle, bei denen eine flexible Regulation des Grundwasserspiegels weniger im Vordergrund steht und es stattdessen mehr auf das Rückhalten von Niederschlagswasser auf einer Fläche 100 ankommt.

So ist es beispielsweise denkbar, dass für die Nutzungsaufnahme einer Nutzfläche 100 eine starke Absenkung des Grundwasserspiegels erforderlich ist und deshalb eine entsprechend tiefliegende Drainage verbaut wird. Nach einer entsprechenden Vorbereitung der Nutzfläche 100 und während der eigentlichen Nutzung stört ein höherer Grundwasserspiegel hingegen nicht. So kann mit einer Regulationseinheit 20 mit in seiner Höhe fixiertem Überlauf 31 ein dauerhaft hoher Grundwasserspiegel gehalten werden. Während der Vorbereitung der Nutzfläche 100 ist es über die Ablauföffnung 35, realisiert durch den zweiten Stutzen 25 des T-Stück 23, jedoch möglich, den Grundwasserspiegel ausreichend abzusenken.

Auch wenn eine solche Situation auf Land- und forstwirtschaftlichen Flächen nicht ausgeschlossen ist, dürfte diese Situation in der Regel am ehesten bei Nutzflächen 100 für die Bebauung eintreten.

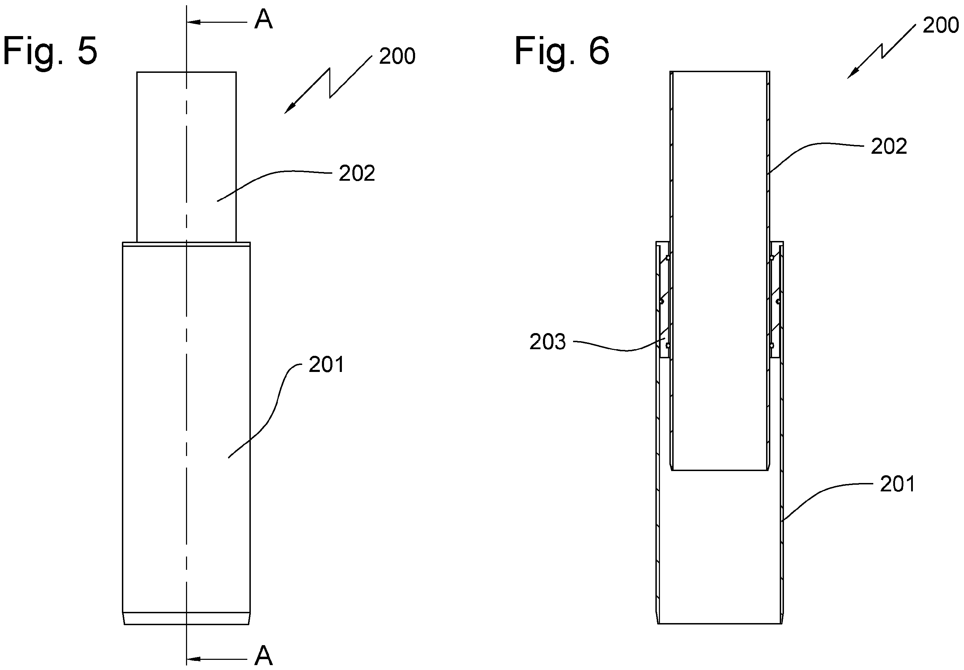

In den Figuren 6 bis 12 ist eine insgesamt mit der Bezugsziffer 200 bezeichnete Teleskoprohranordnung in zwei unterschiedlichen Ausführungsformen gezeigt.

Beiden Ausführungsformen ist gemein, dass sie ein erstes Rohrstück 201 und ein zweites Rohrstück 202 umfassen, wobei das erste Rohrstück 201 einen größeren Durchmesser als das zweite Rohrstück 202 aufweist. Das zweite Rohrstück 202 ist längsverschieblich in dem ersten Rohrstück 201 gelagert, sodass jeweils eine Teleskoprohranordnung 200 entsteht.

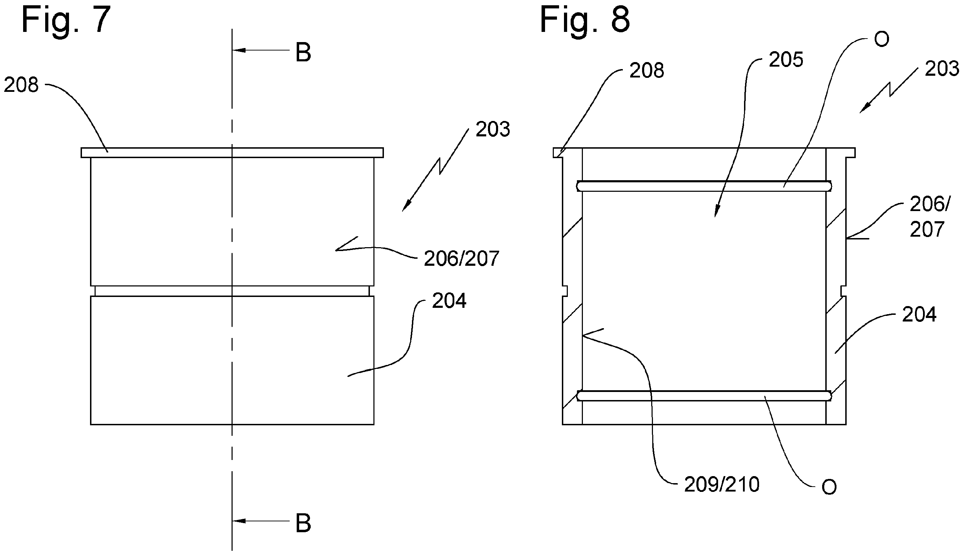

Zur Lagerung der Rohrstücke 201 und 202 aneinander verfügt die in den Figuren 5 bis 8 dargestellte Teleskoprohranordnung 200 der ersten Ausführungsform über eine erste Variante einer Teleskopmuffe 203. Diese erste Teleskopmuffe 203 ist in Seitenansicht in Figur 7 und in Schnittansicht in Figur 8 gezeigt.

Die Teleskopmuffe 203 wird durch eine Ringwand 204 gebildet, die von einem Durchtrittsraum 205 durchsetzt ist. Die Ringwand 204 verfügt über eine Außenumfangsfläche 206, die einen erste Zylinderabschnitt der Teleskopmuffe 203 bildet und eine erste Rohranlagefläche 207 darstellt. An einem Ende der Teleskopmuffe 203 ist die Ringwand 204 an ihrem Außenumfang mit einem Anlageflansch 208 versehen.

Die Ringwand 204 bildet darüber hinaus eine Innenumfangsfläche 209 aus. Die Innenumfangsfläche 209 definiert einen zweiten Zylinderabschnitt der Teleskopmuffe 203 und stellt eine zweite Rohranlagefläche 210 dar.

Die Teleskopmuffe 203 in der ersten Ausführungsform wird in das erste Rohrstück 201 eingesetzt, sodass die erste Rohranlagefläche 207 an der Innenumfangswand des ersten Rohrstücks 201 anliegt. Ein Rohrende des ersten Rohrstücks 201 sitzt bei korrekt montierter Teleskopmuffe 203 am Anlageflansch 208 der Teleskopmuffe 203 an. Um eine ausreichende Abdichtung zwischen der Teleskopmuffe 203 und dem ersten Rohrstück 201 zu gewährleisten, können zwischen der Rohrwand und der Außenumfangsfläche 206 Dichtelemente, beispielsweise O-Ring-Dichtungen angeordnet sein. Der durch die Außenumfangsfläche 206 definierte erste Rohrabschnitt nimmt also das erste Rohrstück 201 auf.

Das zweite Rohrstück 202 wird bei der Teleskopmuffe 203 der ersten Ausführungsform in den Durchtrittsraum 205 der Teleskopmuffe 203 eingeschoben und ist so innerhalb der Teleskopmuffe 203 gelagert. Der durch die Innenumfangsfläche 209 definierte zweite Zylinderabschnitt nimmt also das zweite Rohrstück auf. Um eine Abdichtung zwischen der Rohrwand des zweiten Rohrstück 202 und der Innenumfangsfläche 209 der Teleskopmuffe 203 zu gewährleisten, ist es vorgesehen, auch hier Dichtelemente zwischenzulegen. Auch hier werden bevorzugt O-Ringe im Bereich der gegenseitigen Anlageflächen angeordnet.

Mittels der Teleskopmuffe 203 der ersten Ausführungsform ist also eine erfindungsgemäße Teleskoprohranordnung 200 herstellbar, die als Regulationseinheit 20 in einem Schacht 10 zur Regulation des Grundwasserspiegels gemäß obiger Beschreibung eingesetzt werden kann.

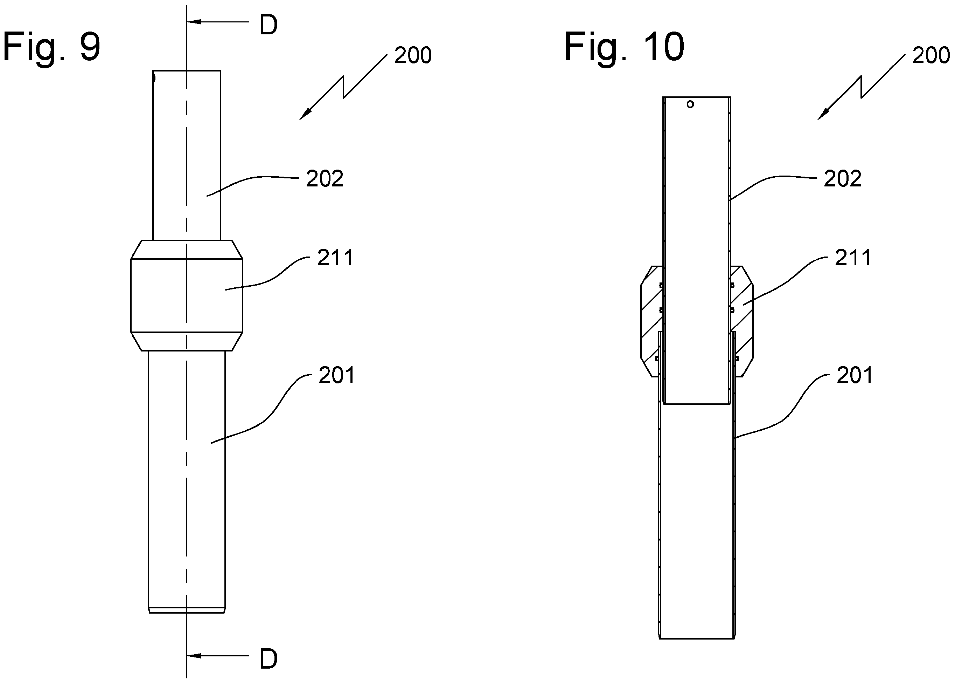

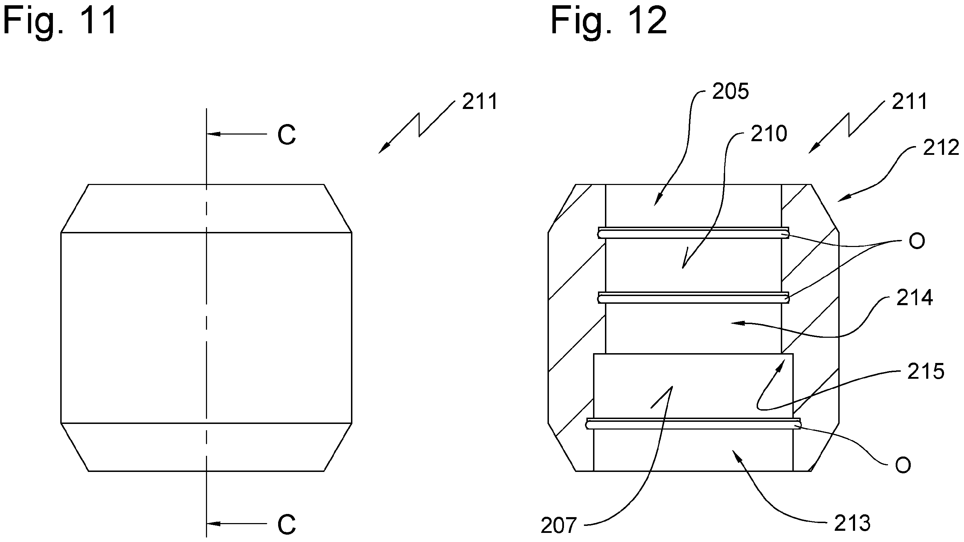

Die Figuren 9 bis 12 zeigen eine zweite Ausführungsform der Teleskoprohranordnung 200, die sich von der ersten Ausführungsform insbesondere durch eine abgewandelte aufgebaute, zweite Teleskopmuffe 211 auszeichnet. Die zweite Teleskopmuffe 211 ist in den Figuren 11 und 12 dargestellt, wobei Figur 12 eine Schnittdarstellung der in Figur 11 dargestellten Teleskopmuffe 211 ist. Auch die zweite Teleskopmuffe 211 verfügt über einen Durchtrittsraum 205, der von einer Gehäusewand 212 der zweiten Teleskopmuffe 211 umgeben ist. Der Durchtrittsraum 205 verfügt über eine Durchtrittsachse, entlang derer ein erster Zylinderabschnitt 213 und ein zweiter Zylinderabschnitt 214 koaxial und in Axialrichtung einander nachgeordnet ausgebildet sind. Der erste Zylinderabschnitt 213 ist in seinem Durchmesser gegenüber dem zweiten Zylinderabschnitt 21 erweitert, sodass im Übergang vom ersten Zylinderabschnitt 213 zum zweiten Zylinderabschnitt 214 eine ringscheibenartige Stufe 215 existiert.

Die Innenoberfläche der Gehäusewand 212 bildet sowohl die erste Rohranlagefläche 207 als auch die zweite Rohranlagefläche 210 aus.

Die zweite Teleskopmuffe 211 nimmt in ihren Durchtrittsraum 205 sowohl das erste Rohrstück 201 als auch das zweite Rohrstück 202 auf. Dafür wird die Teleskopmuffe 211 zunächst auf das erste Rohrstück 201 aufgeschoben, bis dessen im ersten Zylinderabschnitt 213 aufgenommenes Ende gegen die ringscheibenartige Stufe 215 aufläuft. Sodann wird das zweite Rohrstück 202 in den zweiten Abschnitt 214 eingeschoben und ist dort relativ zum ersten Rohrstück 201 bewegbar. Auch bei der Teleskopmuffe 211 der zweiten Ausführungsform ist es denkbar, dass im Bereich gegenseitigen Anlagefläche von Teleskopmuffe 211 und erstem Rohrstück 201 bzw. zweitem Rohrstück 202 Dichtelemente wie O-Ringe eingefügt sind.

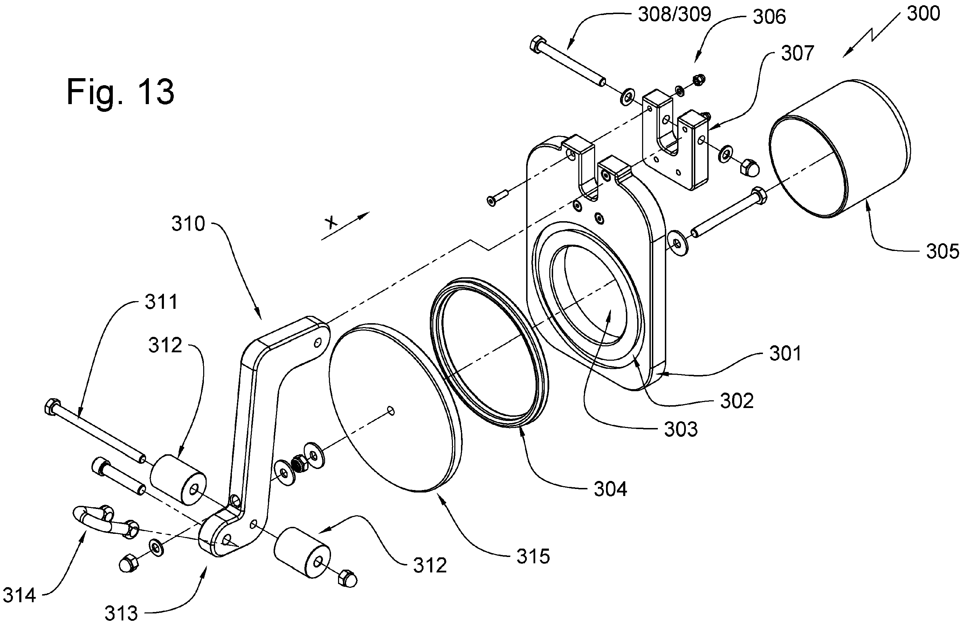

Eine weitere Ausführungsform der Erfindung ist in den Figuren 13 bis 17 gezeigt. Hierbei handelt es sich um eine Stauklappe, die insgesamt mit der Bezugsziffer 300 bezeichnet ist.

Die Stauklappe 300 dient dazu, eine nicht weiter in den Figuren dargestellt Rohrleitung in Ablauf Richtung X eines Fluides zu verschließen. Bevorzugt wird diese Stauklappe 300 eingesetzt, um den schachtbodennahen Ablauf der Regulationseinheit 20 eines Schachtes 10 zur Grundwasserspiegelregulation zu verschließen.

Die Stauklappe 300 umfasst als Basisbauteil zunächst eine Andruckplatte 301. Die Andruckplatte 301 weist auf ihrer der Fluidablaufrichtung X entgegen gerichteten Vorderseite zunächst eine Nut 302 auf, die eine die Andruckplatte 301 durchsetzende Ablauföffnung 303 umgibt. Die Nut 302 dient dazu, einen Dichtring 304 aufzunehmen. Auf der in Ablaufrichtung X weisenden Rückseite ist die Andruckplatte 301 mit einem Rohrstutzen 305 versehen.

Die Andruckplatte 301 trägt darüber hinaus ein insgesamt mit 306 bezeichnetes Scharnierelement. Dieses Scharnierelement 306 ist im Ausführungsbeispiel als in etwa U-förmiges Angelteil 307 ausgebildet, welches auf der Rückseite der Andruckplatte 301 festgelegt wird. Ein Schraubbolzen 308 bildet die Scharnierachse 309 und hält ein Bandteil 310, welches nach Art eines inversen Z geformt ist.

Das Bandteil 310 trägt zunächst die Verschlussklappe 315, welche in geschlossenem Zustand die Ablauföffnung 303 überdeckt und am Dichtring 304 anliegt. Die Verschlussklappe 315 ist in einer bevorzugten, in den Darstellungen jedoch nicht gezeigten Ausführungsform kardanisch beweglich am Bandteil 310 angeordnet, um innerhalb der im System zulässigen Montage- und Fertigungstoleranzen eine plane Anlage an der Andruckplatte 301 bzw. dem Dichtring 304 zu gewährleisten.

Dass dem Angelteil 307 abgewandte Ende des Bandteils 310 ist sodann mit einem Gewichtsträger 311 versehen, der hier ebenfalls in einer einfachen Ausführung aus einem Schraubbolzen besteht und zwei Gewichte 312 trägt. Dass dem Angelteil 307 abgewandten Ende des Bandteils 310 verfügt darüber hinaus über einen Ansatz 313, an welchen eine Betätigungshandhabe ansetzbar ist. Im Ausführungsbeispiel handelt es sich bei dem Ansatz 313 um eine Öse 314, in die beispielsweise eine Kette oder ein Seil einhängbar ist, um die Verschlussklappe 315 aus der Ferne öffnen zu können.

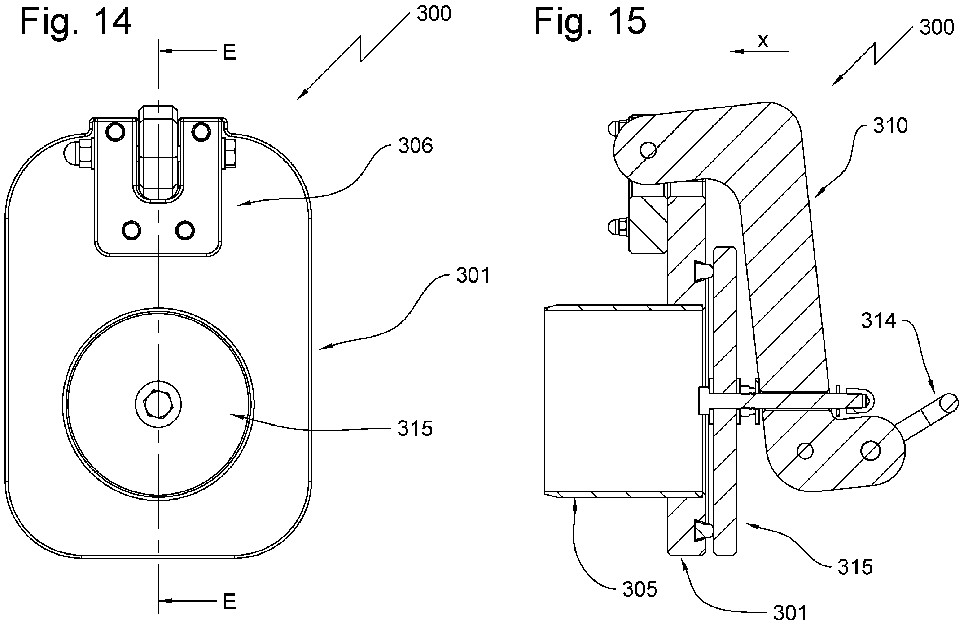

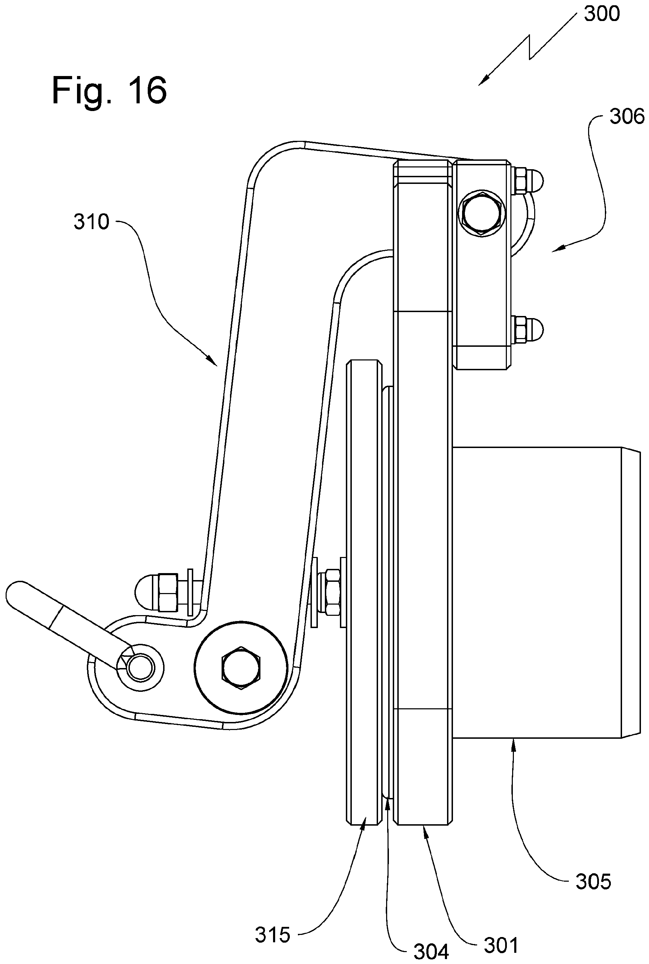

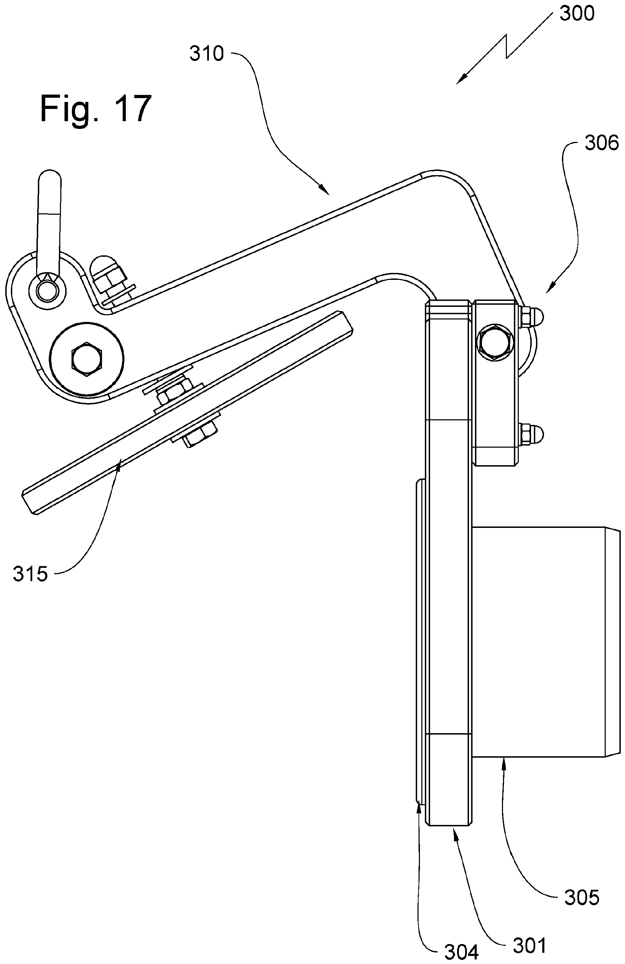

Anhand der Schnittansicht in Figur 15 (die Lage des Schnittes gibt Figur 14 wieder) wird deutlich, wie die Verschlussklappe 315 an der Andruckplatte 301 und dort vornehmlich am Dichtring 304 angelegt und eine in Fluidablauf Richtung X hinter der Verschlussklappe liegende, nicht weiter dargestellte Rohrleitung verschließt. Aus der Schnittansicht gemäß Figur 15 aber auch aus den Seitenansichten nach Figur 16 Figur 17 wird darüber hinaus deutlich, dass der an der Andruckplatte 301 angeordnete Rohrstutzen 305 sich in vorteilhafter Weise in die nicht dargestellte, durch die Stauklappe 300 zu verschließende Rohrleitung einschieben lässt und so eine besonders einfache Montage der Stauklappe 300 an der Rohrleitung durch einfaches aufstecken erlaubt.

Die Seitenansicht gemäß Figur 16 zeigt die Stauklappe 300 in Geschlossenstellung. Hier liegt die Verschlussklappe 315 an in Figur 16 zwischen Andruckplatte 301 und Verschlussklappe 315 angeordneten Dichtring 304 an. Demgegenüber befindet sich die Verschlussklappe 315 in Figur 17 in Offenstellung, sodass ein Fluidablauf durch die Ablauföffnung 303 in eine nicht dargestellte, in Fluidablauf Richtung X hinter der Andruckplatte 301 liegende Rohrleitung möglich ist.

Die Erfindung betrifft also Folgendes:
A. Schacht (10) zur Grundwasserspiegelregulation auf einer Nutzfläche, wie Acker- oder Forstfläche oder Baufläche, insbesondere Drainageschacht,
   - mit einer zylindrischen Schachtwand (14), die einen Aufnahmeraum (15) für Drainagewasser umgibt,
   - mit einem Schachtboden (12), der in den Schacht (10) nach unten hin begrenzt,
   - mit einer dem Schachtboden abgewandten Wartungsöffnung (13), über welche der Schacht (10) zugänglich ist,
   - mit wenigstens einem Zulauf (17) für eine Drainageleitung, über welchen Drainagewasser dem Aufnahmeraum (15) zuführbar ist,
   - mit wenigstens einem Ablauf (18), über den das Drainagewasser aus dem Aufnahmeraum (15) abführbar ist,
   - mit einer Regulationseinheit (20), die als insbesondere vertikal im Aufnahmeraum (15) angeordnete Barriere zwischen dem Zulauf (17) und dem Ablauf (18) angeordnet ist und den Aufnahmeraum (15) in einen Zulaufraum (33) und einen Ablaufraum (34) unterteilt, wobei das zulaufende Drainagewasser im Zulaufraum (33) gesammelt wird und über einen Überlauf (31) über die Barriere in den Ablaufraum (34) gelangen kann,
   - mit einer Höhenverstellung für die Barriere, mittels derer die Höhe des Zulaufraumes (33) veränderbar ist,
      **dadurch gekennzeichnet,** dass
   - die Höhenverstellung stufenlos ausgestaltete ist und / oder
   - die Barriere schachtbodennah eine verschließbare Ablauföffnung (35) aufweist, die den Zulaufraum (33) und den Ablaufraum (34) unter Umgehung des Überlaufs miteinander verbindet.
B. Schacht (10) nach A, dadurch gekennzeichnet, dass die Barriere als ein vertikal im Aufnahmeraum (15) angeordnetes Rohr (21) ausgebildet ist, welches mit seinem schachtbodennahen Ende am Ablauf (18) angeschlossen ist, dessen schachtbodenfernes Ende den Überlauf (31) bildet und dessen Rohrinnenraum der Ablaufraum ist.
C. Schacht (10) nach B, dadurch gekennzeichnet, dass das Rohr (21) schachtbodennah die Ablauföffnung (35) aufweist, die mittels einer Klappe (26) oder eines Schiebers verschließbar ist.
D. Schacht (10) nach B, dadurch gekennzeichnet, dass das die Barriere bildende Rohr (28) teleskopierbar ausgebildet ist, insbesondere als zwei über eine Teleskopmuffe (32) aneinander angeordnete Rohre (22, 29) ausgebildet ist.
E. Schacht (10) nach einem der vorhergehenden Buchstaben, dadurch gekennzeichnet, dass der Schacht (10) bodenseitig unterhalb des Ablaufs (18) einen Absetzbereich für im Drainagewasser mitgeführte Schweb- und Fremdstoffe ausbildet.
F. Schacht (10) nach C, dadurch gekennzeichnet, dass die Klappe (26) oder der Schieber über Betätigungsmittel verfügen, die eine Fernentriegelung ermöglichen.
G. Schacht (10) nach F, dadurch gekennzeichnet, dass die Fernentriegelung über die Wartungsöffnung (13) ermöglicht ist, beispielsweise mittels einer Zugkette oder eines Spindelantriebs.
H. Schacht (10) nach einem der vorhergehenden Buchstaben, dadurch gekennzeichnet, dass der Zulaufraum mit einer Füllstandsanzeige ausgestattet ist.
I. Drainagesystem zur Grundwasserspiegelregulation auf einer Nutzfläche, wie Acker- oder Forstfläche oder Baufläche mit einem Drainageschacht (10) nach einem der Buchstaben A bis H, dadurch gekennzeichnet, dass der Drainageschacht (10) als Zentralschacht für eine zu drainierende Fläche (100) ausgebildet ist und hierzu mehrere Zuläufe für mehrere Drainageleitungen ausbildet.
J. Teleskoprohranordnung (200) in einer Rohrleitung für den Transport von Fluiden, insbesondere von Wasser,
   - mit einem ersten Rohrstück (201),
   - mit einem zweiten Rohrstück (202),
   - mit einer Muffe (203), welche das erste Rohrstück (201) und das zweite Rohrstück (202) teleskopierbar aneinander anordnet,
   - wobei die Muffe (203) einen ersten Zylinderabschnitt (213) mit einer ersten Rohranlagefläche (207) ausbildet, an welcher das erste Rohrstück (201) angeordnet ist,
   - wobei die Muffe (211) einen zweiten Zylinderabschnitt (214) mit einer zweiten Rohranlagefläche (210) ausbildet in welcher das zweite Rohrstück (202) verschieblich gelagert ist.
K. Teleskoprohanordnung (200) nach J, dadurch gekennzeichnet, dass der erste Zylinderabschnitt (213) den zweiten Zylinderabschnitt (214) unter Zwischenlage einer Ringwand (204) umgibt.
L. Teleskoprohranordnung (200) nach J, dadurch gekennzeichnet, dass die Außenumfangsfläche (206) der Ringwand (204) die erste Rohranlagefläche (207) für das erste Rohrstück (201) ist und dass die Innenumfangsfläche (209) der Ringwand (204) die zweite Rohranlagefläche (210) für das zweite Rohrstück (202) ist.
M. Teleskoprohranordnung (200) nach L, dadurch gekennzeichnet, dass die Ringwand (204) innerhalb des ersten Rohrstücks (201) gelagert ist.
N. Teleskoprohranordnung (200) nach Anspruch M, dadurch gekennzeichnet, dass die Ringwand (204) einen umfangserweiternden Anlageflansch (208) für ein Ende des ersten Rohrstücks (201) ausbildet.
O. Teleskoprohranordnung (200) nach J, dadurch gekennzeichnet, dass die Muffe eine Gehäusewand (212) aufweist, die einen Durchtrittsraum (205) umgibt.
P. Teleskoprohranordnung (200) nach O, dadurch gekennzeichnet, dass der erste Zylinderabschnitt (211) und der zweite Zylinderabschnitt (214) entlang der Durchtrittsachse des Durchtrittsraumes (205) hintereinander angeordnet, wobei der erste Zylinderabschnitt (213) einen größeren Durchmesser als der zweite Zylinderabschnitt (214) aufweist.
Q. Teleskoprohranordnung (200) nach P, dadurch gekennzeichnet, dass die erste Rohranlagefläche (207) und die zweite Rohranlagefläche (210) von der Innenumfangsfläche (209) der Gehäusewand (212) ausgebildet sind und das beide Rohrstücke innerhalb der Muffe angeordnet sind.
R. Teleskoprohranordnung (200) nach O und P, dadurch gekennzeichnet, dass die Gehäusewand (212) im Übergang vom ersten Zylinderabschnitt (213) zum zweiten Zylinderabschnitt (214) eine ringscheibenartige Stufe (215) ausbildet, deren Ringfläche eine Anschlagfläche für das erste Rohrstück (201) ausbildet.
S. Stauklappe (300) für eine Rohrleitung, durch welche ein Fluid, insbesondere Wasser entlang einer Ablaufrichtung X geführt ist,
   - mit einer mit einer Ablauföffnung (303) durchsetzten Andruckplatte (301),
   - mit einer Verschlussklappe (315), die der Andruckplatte (301) in Ablaufrichtung X vorgeordnet ist und im Schließzustand die Ablauföffnung (303) verschließend an der Andruckplatte (301) anliegt,
   - mit einem Dichtelement (304) zwischen der Andruckplatte (301) und der Verschlussklappe (315), welches einen Fluiddurchtritt zwischen der Andruckplatte (301) und der Verschlussklappe (315) verhindert.
T. Stauklappe (300) nach S, dadurch gekennzeichnet, dass die Andruckplatte (301) auf Ihrer der Verschlussklappe (315) abgewandten Seite einen Rohrstutzen (305) zum Anschluss an die Rohrleitung trägt.
U. Stauklappe (300) nach T, dadurch gekennzeichnet, dass die Ablauföffnung (303) in Ihrem Durchmesser durch den Einsatz eines Adapterringes verringerbar ist und dass der Rohrstutzen (305) am Adapterring festgesetzt ist.
V. Stauklappe (300) nach S, dadurch gekennzeichnet, dass die Andruckplatte (301) ein Scharnierelement (306) trägt, an welchem die Verschlussklappe (315) schwenkbar angeordnet ist.
W. Stauklappe (300) nach Anspruch 19, dadurch gekennzeichnet, dass die Verschlussklappe (315) mit einem Gewichtsträger (311) versehen ist, der bei Bedarf mit einem die Verschlussklappe (315) beschwerenden Gewicht (314) versehen ist.

### BEZUGSZEICHENLISTE

- 10: Schacht zur Regulation des Grundwasserspiegels/Drainageschacht
- 11: Betonring
- 12: Schachtboden
- 13: Schachtöffnung
- 14: Schachtwand
- 15: Aufnahmeraum
- 16: Steigeisen
- 17: Zulauf
- 18: Ablauf

- 20: Regulationseinheit
- 21: Rohrleitung
- 22: erstes Rohrstück v. 28
- 23: T-Stück
- 24: erster Stutzen
- 25: zweiter Stutzen
- 26: Stauklappe
- 27: dritter Stutzen
- 28: Teleskoprohranordnung
- 29: zweites Rohrstück v. 28
- 30: Einlauföffnung
- 31: Überlauf
- 32: Teleskopiermuffe
- 33: Zulaufraum
- 34: Ablaufraum
- 35: Ablauföffnung

- 100: Nutzfläche
- 101: Entwässerungsgraben
- 102: Drainagerohr
- 103: Revisionsschacht
- 104: Entwässerungsrohr
- 105: Sammelrohr

- 200: Teleskoprohranordnung
- 201: erstes Rohrstück
- 202: zweites Rohrstück
- 203: erste Teleskopmuffe
- 204: Ringwand
- 205: Durchtrittsraum
- 206: Außenumfangsfläche
- 207: erste Rohranlagefläche
- 208: Anlageflansch
- 209: Innenumfangsfläche
- 210: zweite Rohranlagefläche
- 211: zweite Teleskopmuffe
- 212: Gehäusewand
- 213: erster Zylinderabschnitt
- 214: zweiter Zylinderabschnitt
- 215: Stufe

- 300: Stauklappe
- 301: Andruckplatte
- 302: Nut
- 303: Ablauföffnung
- 304: Dichtring
- 305: Rohrstutzen
- 306: Scharnierelement
- 307: Angelteil
- 308: Schraubbolzen
- 309: Scharnierachse
- 310: Bandteil
- 311: Gewichtträger
- 312: Gewicht
- 313: Ansatz
- 314: Öse
- 315: Verschlussklappe

- X: Fluidablaufrichtung
- N: Nutzpflanze
- O: O-Ring-Dichtung

## Patentansprüche

1. Schacht (10) zur Grundwasserspiegelregulation auf einer Nutzfläche, wie Acker- oder Forstfläche oder Baufläche, insbesondere Drainageschacht,
- mit einer zylindrischen Schachtwand (14), die einen Aufnahmeraum (15) für Drainagewasser umgibt,
- mit einem Schachtboden (12), der in den Schacht (10) nach unten hin begrenzt,
- mit einer dem Schachtboden abgewandten Wartungsöffnung (13), über welche der Schacht (10) zugänglich ist,
- mit wenigstens einem Zulauf (17) für eine Drainageleitung, über welchen Drainagewasser dem Aufnahmeraum (15) zuführbar ist,
- mit wenigstens einem Ablauf (18), über den das Drainagewasser aus dem Aufnahmeraum (15) abführbar ist,
- mit einer Regulationseinheit (20), die als insbesondere vertikal im Aufnahmeraum (15) angeordnete Barriere zwischen dem Zulauf (17) und dem Ablauf (18) angeordnet ist und den Aufnahmeraum (15) in einen Zulaufraum (33) und einen Ablaufraum (34) unterteilt, wobei das zulaufende Drainagewasser im Zulaufraum (33) gesammelt wird und über einen Überlauf (31) über die Barriere in den Ablaufraum (34) gelangen kann,
- mit einer Höhenverstellung für die Barriere, mittels derer die Höhe des Zulaufraumes (33) veränderbar ist,
**dadurch gekennzeichnet, dass**
- die Höhenverstellung stufenlos ausgestaltete ist und / oder
- die Barriere schachtbodennah eine verschließbare Ablauföffnung (35) aufweist, die den Zulaufraum (33) und den Ablaufraum (34) unter Umgehung des Überlaufs miteinander verbindet.

2. Schacht (10) nach Anspruch 1, **dadurch gekennzeichnet, dass** die Barriere als ein vertikal im Aufnahmeraum (15) angeordnetes Rohr (21) ausgebildet ist, welches mit seinem schachtbodennahen Ende am Ablauf (18) angeschlossen ist, dessen schachtbodenfernes Ende den Überlauf (31) bildet und dessen Rohrinnenraum der Ablaufraum ist.

3. Schacht (10) nach Anspruch 2, **dadurch gekennzeichnet, dass** das Rohr (21) schachtbodennah die Ablauföffnung (35) aufweist, die mittels einer Klappe (26) oder eines Schiebers verschließbar ist.

4. Schacht (10) nach Anspruch 2, **dadurch gekennzeichnet, dass** das die Barriere bildende Rohr (28) teleskopierbar ausgebildet ist, insbesondere als zwei über eine Teleskopmuffe (32) aneinander angeordnete Rohre (22, 29) ausgebildet ist.

5. Schacht (10) nach einem der vorhergehenden Ansprüche, **dadurch gekennzeichnet, dass** der Schacht (10) bodenseitig unterhalb des Ablaufs (18) einen Absetzbereich für im Drainagewasser mitgeführte Schweb- und Fremdstoffe ausbildet.

6. Schacht (10) nach Anspruch 3, **dadurch gekennzeichnet, dass** die Klappe (26) oder der Schieber über Betätigungsmittel verfügen, die eine Fernentriegelung ermöglichen.

7. Schacht (10) nach Anspruch 6, **dadurch gekennzeichnet, dass** die Fernentriegelung über die Wartungsöffnung (13) ermöglicht ist, beispielsweise mittels einer Zugkette oder eines Spindelantriebs.

8. Schacht (10) nach einem der vorhergehenden Ansprüche, **dadurch gekennzeichnet, dass** der Zulaufraum mit einer Füllstandsanzeige ausgestattet ist.

9. Drainagesystem zur Grundwasserspiegelregulation auf einer Nutzfläche, wie Acker- oder Forstfläche oder Baufläche mit einem Drainageschacht (10) nach einem der Ansprüche 1 bis 7, **dadurch gekennzeichnet, dass** der Drainageschacht (10) als Zentralschacht für eine zu drainierende Fläche (100) ausgebildet ist und hierzu mehrere Zuläufe für mehrere Drainageleitungen ausbildet.

10. Teleskoprohranordnung (200) in einer Rohrleitung für den Transport von Fluiden, insbesondere von Wasser,
- mit einem ersten Rohrstück (201),
- mit einem zweiten Rohrstück (202),
- mit einer Muffe (203), welche das erste Rohrstück (201) und das zweite Rohrstück (202) teleskopierbar aneinander anordnet,
- wobei die Muffe (203) einen ersten Zylinderabschnitt (213) mit einer ersten Rohranlagefläche (207) ausbildet, an welcher das erste Rohrstück (201) angeordnet ist,
- wobei die Muffe (211) einen zweiten Zylinderabschnitt (214) mit einer zweiten Rohranlagefläche (210) ausbildet in welcher das zweite Rohrstück (202) verschieblich gelagert ist.
